# EUROPEAN PATENT APPLICATION

(11) **EP 1 931 156 A1**
(43) Date of publication of application: **11.06.2008**
(21) Application number: 06256274.9
(22) Date of filing: 08.12.2006
(51) Int. Cl.: H04Q 7/32

(54) **Apparatus for enabling the operation of an applications section of a mobile radio communications device comprising a SIM lock**

(71) Applicant: NEC Electronics Corporation, Kawasaki, Kanagawa 211-8668 (JP)
(72) Inventor: Ormson, Richard Gavin, Workingham Berkingshire RG41 5JF (GB); Hollis, Steven John, Maidenhead Berkshire SL6 5JS (GB)
(74) Representative: W.P. Thompson & Co.

(57) **Abstract**

The present invention provides for a mobile radio communications device handset having a communications section for network access operations and an applications section for user-interface operations, and further including personalisation locks for controlling operation on the basis of the identification of whether a SIM card received therein is authorised, wherein the device is arranged such that the applications section can operate with a SIM card that will be identified as unauthorised by personalisation locks associated with a communications section, and such that data transfer between such a SIM and the device handset can be allowed.

## Description

The present invention relates to a mobile radio communications device and in particular to such a device including a communications section arranged to handle operations involving access to a mobile radio communications network, and an applications section for user-interface operations.

In order to enhance security of operation of mobile radio communication devices such as cell phone handsets, current 3rd Generation Partnership Project (3GPP) standards, and in particular standard 3GPP TS 22.0.22, require a cell phone handset to provide a variety of locking functions which, as security measures, serve to prevent use of the cell phone handset unless certain security-related criteria are met.

Generally, each of these locking functions employs a specific identification number loaded into memory within the cell phone handset, and which identification number can be employed for determining whether or not use of the cell phone handset should be permitted.

As is well known, in order to function appropriately most cell phone handsets require a Subscriber Identity Module (SIM), or USIM, card which contains identity information required to allow for connection of the handset to a network.

If one of the locking functions is active, part of the aforementioned identity information in the SIM is compared with the identity data stored in the handset memory. If, on such comparison, a match is found, then the handset is allowed to operate in a normal manner. If, however, no such match is found, then the handset is placed into a state in which only emergency calls are allowed.

As mentioned, such known locks allow a cell phone handset user to lock their handset to a specific SIM for enhanced protection against unauthorised use with other SIMs. Also, the locks can be provided to allow a network operator to lock a subsidised cell phone handset to a particular group of SIMs which might be specific to that operator, and thereby avoid subsidising a cell phone handset that might then be used on a rival network.

Further, the locks can prove advantageous for a corporate customer insofar as they can lock all of their handsets to a specific set of SIMs, and thereby ensure that their handsets are only used for authorised business purposes.

For GSM/UMTS cell phone handsets, there are currently five different lock possibilities comprising network, network subset, corporate user, service provider and specific SIM locks.

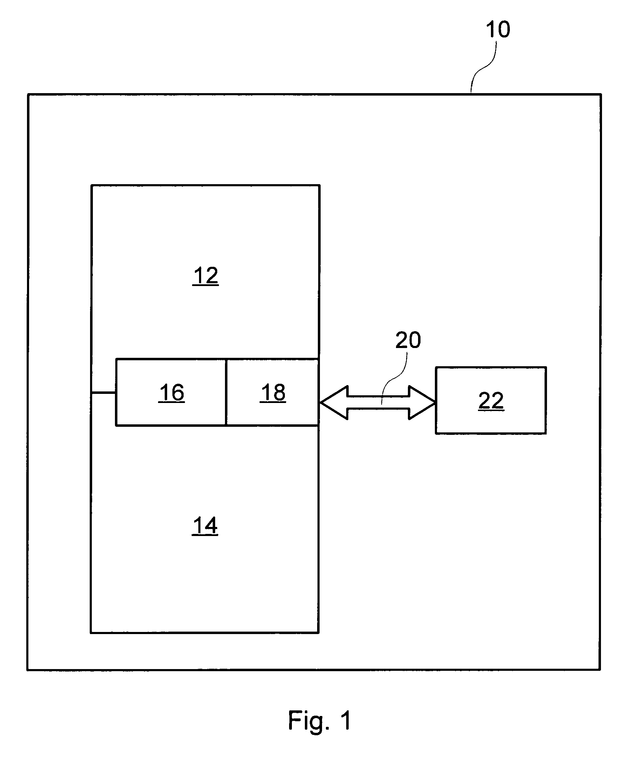

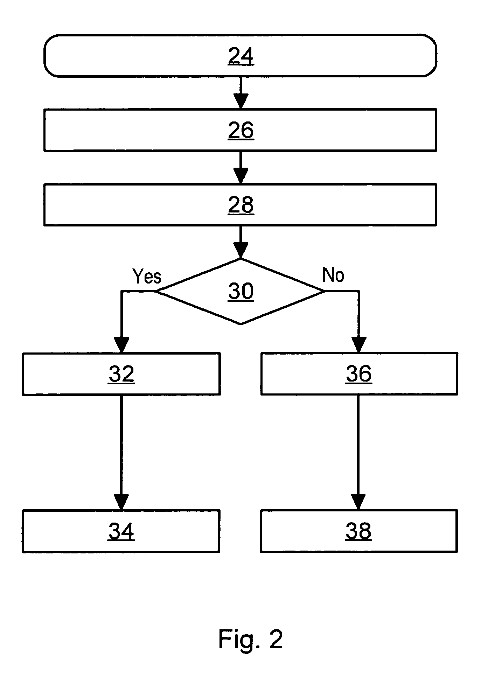

Collectively, such locks are referred to as personalisation locks and under existing implementations of the locks, the entire cell phone handset operation is inhibited if the relevant identification code within the handset, or part thereof, does not match the identification code presented by the SIM. Fig. 1 is a schematic diagrammatic representation of such known functionality within a mobile phone handset and Fig. 2 illustrates a corresponding operational sequence.

With regard to Fig. 1, there is illustrated a 3G cell phone handset 10 including an applications section 12 and a separate communications section 14 arranged, respectively, to provide for user-interface operations and network-access operations.

Personalisation locks 16 are provided for both sections 12, 14 and a SIM handler 18 is arranged to communicate via interface 20 with a SIM 22, or indeed a U (SIM) mounted within the handset 10.

As mentioned, the personalisation locks 16 are provided for all areas of the handset 10 such that the entire handset 10 operation is inhibited in the absence of the correct personalisation details being entered by the user.

Turning now to Fig. 2, there is illustrated an operational sequence commencing with the handset 10 being powered up at step 24.

At step 26, the standard boot process is conducted and, at step 28, the personalisation locks 16 are then checked.

If, through such checking, the SIM 22 mounted within the device 10 is verified as valid, the handset proceeds via step 32 to enter normal mode of operation 34. In this mode 34, all applications are made available.

If, however, at step 30 it is identified that the SIM 22 is not valid, the handset is disabled at step 36 such that, no communication nor application functions are then made available to the handset at stage 38.

However, according to the present invention it has been identified that such an arrangement might not prove optimal in that there can be circumstances in which a cell phone handset user might legitimately require use of a SIM that is regarded as "unauthorised" on the basis of the above mentioned locking arrangement.

For example, if a cell phone handset user changes network, they will receive a new handset and associated new SIM card from the new network provider, although their personal data, such as contact list, phone numbers and downloaded information etc., will remain stored on their previous handset and SIM. Even in instances where the new handset might be from the same manufacturer as the current handset, it can prove problematic to transfer such data between handsets.

According to the present invention, it is identified that, since data within SIM cards is always stored in a common format, providing access for a new handset to the previous SIM would provide a ready means for allowing data to be transferred in a simple and universal manner from the old handset and old SIM to the new handset and new SIM.

Also, it is recognised that the volume of data that can be stored on a SIM card is gradually increasing so as to improve the possibility of a SIM card functioning as a data transfer card to rival existing SD, memory sticks and other devices. Significant amounts of data storage will therefore be available within a SIM card such that the potential for maintenance and transfer of user data becomes an increasingly attractive option.

As will be appreciated, the present invention seeks to provide for a mobile radio communications device which can offer advantages over known such devices.

According to the present invention there is provided a mobile radio communications device and including a communications section for network access operations and an applications section for user-interface operations, the device including personalisation locks for controlling operation on the basis of the identification of whether a SIM card received therein is authorised, wherein the device is arranged such that the applications section can operate with a SIM card that will be identified as unauthorised by personalisation locks associated with the communications section, and vice versa.

Advantageously therefore, through relaxing the personalisation locks associated with the applications section as compared with those of the communications section, enhanced-user experience can be achieved insofar as data from a previous SIM can be accessed and loaded into a new cell phone handset but without comprise to the overall security of the operation of the new handset.

Alternatively, through relaxing the personalisation locks associated with the communications section as compared with those of the applications section, many users may be permitted to use a handset for simple operations such as making calls, while access to sensitive applications and data is restricted to a more limited user subset, or even to a single user.

As the SIM is normally connected to the applications section, advantageously, the device handset is arranged such that a SIM handler and API related interface between the communications section and the applications section remains active even when the communications section is locked.

Alternatively, the device handset can be arranged with a duplicate SIM interface and SIM handler and arranged for direct connection of the SIM to the applications section.

In a basic embodiment the device handset is advantageously arranged such that the personalisation locks apply only to the communications section

In a further embodiment, the device handset is advantageously arranged such that the applications section also includes personalisation locks, wherein the lock setting can be different to those of the communications section. The applications section locks may be set to be more or less restrictive than those in the communications section.

In accordance with one aspect, the personalisation lock of the applications section is arranged to restrict the range of applications available to the user. For example, such range applications can be limited to simple data transfer-operations in the absence of identification of an authorised SIM.

Yet further, the personalisation locks associated with the applications section may be arranged to allow data transfer of the operations but to prevent use of such data within the handset without an authorised SIM being identified.

In one further arrangement, the locks associated with the applications section can be arranged to be less-specific than those associated with the communications section.

For example if the communications section is restricted to a particular SIM, the locks associated with the applications section may then be arranged to identify a superset of SIMs containing that particular SIM as authorised.

Yet further, the degree of operation allowed can be less for all the other said related SIMs than for the said particular SIM.

Even further, levels of authorisation are possible. For example the particular SIM may be granted full access, the superset of SIMs given limited access, and all other SIMs given data transfer privileges only.

It should also be appreciated that the device handset can be arranged such that the personalisation locks apply only to the communications section.

Advantageously, software related to the personalisation locks is located within the communications section.

This can prove particularly advantageous insofar as the communications section can exhibit security features which are not present in the applications section and which serve to enhance the security with which the aforementioned software relating to the personalisation locks can be stored.

With regard to the preceding embodiment it will therefore be appreciated that the applications section of the authorised handset can be arranged to be activated irrespective of the particular SIM located within the device handset.

In this manner, and with a non-authorised SIM provided within the device, the applications available within the handset can of course be limited to those not requiring network access.

Advantageously, the known techniques for controlling the setting and changing of personalisation locks can be retained. There are many such techniques, and the new architecture proposed is compatible with all such techniques.

Further, although the personalisation locks setting may allow for copying of data, this does not preclude the operation of a separate Digital Right Management (DRM) system preventing the reproduction of copyrighted data. Currently DRM systems, if found to be present, operate alongside and independently of any handset personalisation locks, and it is intended that this still be the case under the personalisation locks proposed in this application

The invention is described further hereinafter, by way of example only, with reference to the accompanying drawings in which:
Figs. 3 to 6 are schematic block diagrams of a mobile radio communications device comprising cell phone handsets according to embodiments of the present invention; and
Fig. 7 is a timing diagram illustrating activation of a mobile radio communications device according to the embodiments of the present invention illustrated in Fig. 3 to 6.

As will be appreciated, the invention is based upon the realization that many modem cell phone handsets employ a split system in which a communications section is provided for dealing with operations involving access to a mobile radio communications network, and also a separate applications section arranged to handle all interaction with the user and connection to peripheral devices such as headsets, personal computers etc.

Also, the communications layer within a cell phone handset is generally designed as a secure system which is isolated from user software and data, whereas the applications layer does not possess such security aspects.

Published Patent Applications GB-A-2 414 138, GB-A-2 414 139 and pending application 0507562.7 illustrate examples of how such enhanced security in the communications layer can be achieved.

As is appreciated from the above, the present invention comprises a cell phone handset arranged to provide partial lock arrangements in which the locking provided to the communications section is different from any such locking provided in relation to the applications section.

Through application of specified personalisation locking only to that part of the handset dealing with network communications, the following particular benefits can be realised.

First enhanced user experience noted above, can be achieved while maintaining the locks original purpose. Secondly the security of the locks can be improved through their location within the communications layer, and therefore in a manner isolated from downloaded user software and data that might compromise their action.

The invention therefore in particular proposes revised operation of the SIM locks described in 3GPP TS 22.022 so that, in one arrangement, they only apply to the portion of the handset that deals with network access.

In this case the applications section of the handset can therefore be allowed to run regardless of the SIM placed in the handset, and without the correct SIM available applications will be limited to those not requiring network access, as described above.

It should be appreciated that this requires the applications section to have access to the SIM even when the communications section is locked down. This can be achieved by retaining the SIM handler and API interface to the applications level in an active state even when the communications section is locked.

As another option a duplicate SIM interface and SIM handler connecting the SIM directly to the applications section can be provided. This option will require additional hardware and signalling to indicate the time after which the applications section can safely access the SIM. Therefore this option is not preferred.

As a further proposal a duplicate of the lock software can be provided in the applications section. In one embodiment, the range of applications available may be restricted to simple transfer operations in the absence of the correct SIM. Although the operator may wish to allow the data transfer operations described above, it may be that use of the data (playing a game, watching a video file, listening to a music file, etc.) would not be allowed without the correct SIM being inserted.

In another arrangement the locks set in the applications layer may be less specific than those in the communications section - for example, if the communications section were locked to a specific SIM, the applications section may have locks to that particular SIM AND a set of SIMs of which that SIM is an member. Then, if the specific SIM was identified as in the handset the full range of applications would be provided.

However, if only a member of the set of SIMs were found then a reduced set of applications would be allowed and if a completely unauthorised SIM were found then only the basic data transfer functions would be provided.

This would advantageously allow the operator or corporate owner to allow use of certain phone applications by a range of users, while restricting certain applications to only the user nominally in charge of the phone.

It should be noted that duplication of the locks specified in 3GPP TS 22.022 in both applications and communications sections in fact allows for more stringent restrictions to be placed on applications use than on the communications section. This is not expected to be the normal mode of operation, but could be useful where for example a set of users are authorised to make calls on a handset, but access to certain applications or data within the handset is allowed only to a more restricted user set.

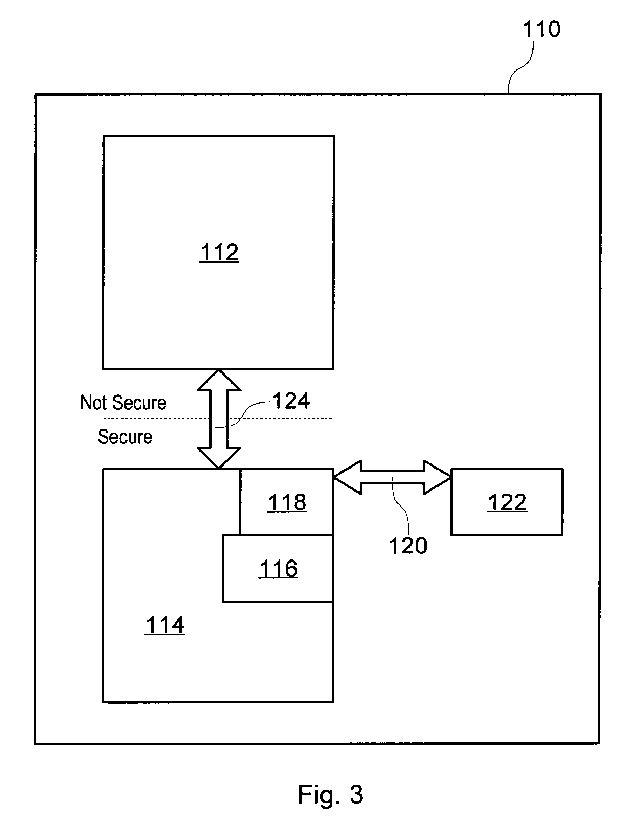

Turning first to Fig. 3, there is illustrated a schematic view of a cell phone handset 110 including an applications section 112, a communications section 114, personalisation locks 116 and a SIM handler 118 for the communications section 114 and an interface 120 for connectivity of the SIM handler 118 to a SIM 122.

Also, an API based interface 124 is provided for connectivity between the secure communications section 114 and the un-secure applications section 112. However, as will be appreciated, in this particular embodiment, the applications section 112 does not include either personalisation locks nor a SIM handler.

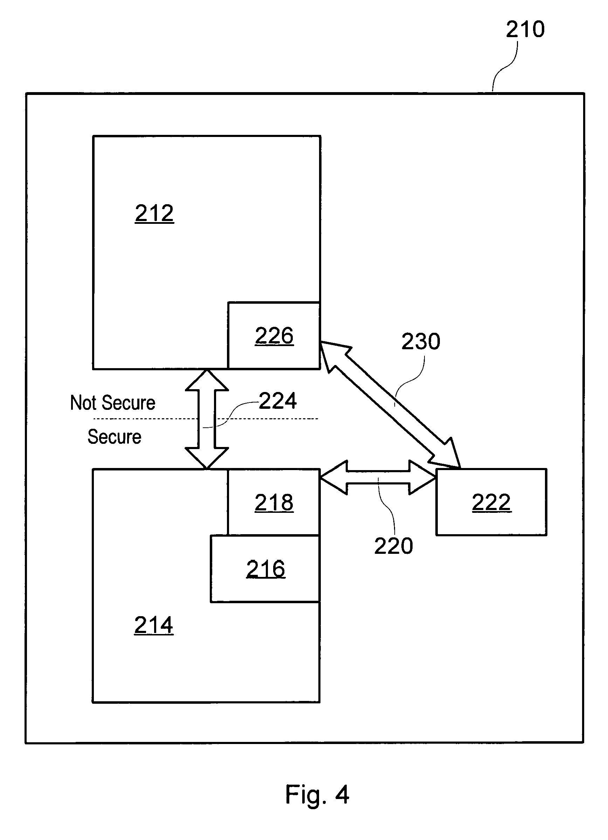

Turning now to Fig. 4, there is an illustration of a cell phone handset 210 according to an embodiment of the present invention and illustrating features similar to that found in Fig. 3. Thus, there is again provided within the handset 210 an applications section 212, a communications section 214, a personalisation locks section 216 relating to the communications section 214, a SIM handler 218 provided within the communications section, an interface 220 to which connectivity to the SIM 222 is achieved. Again, an API based interface 224 is provided for communication between the secure communications section 214 and the un-secure applications section 212. The applications section 212 again employs its own SIM handler 226 and a direct interface 230 is provided for direct SIM connection between the SIM 222 and the SIM handler 226 of the applications section 212.

However, it will be appreciated that no personalisation locks are provided for the applications section.

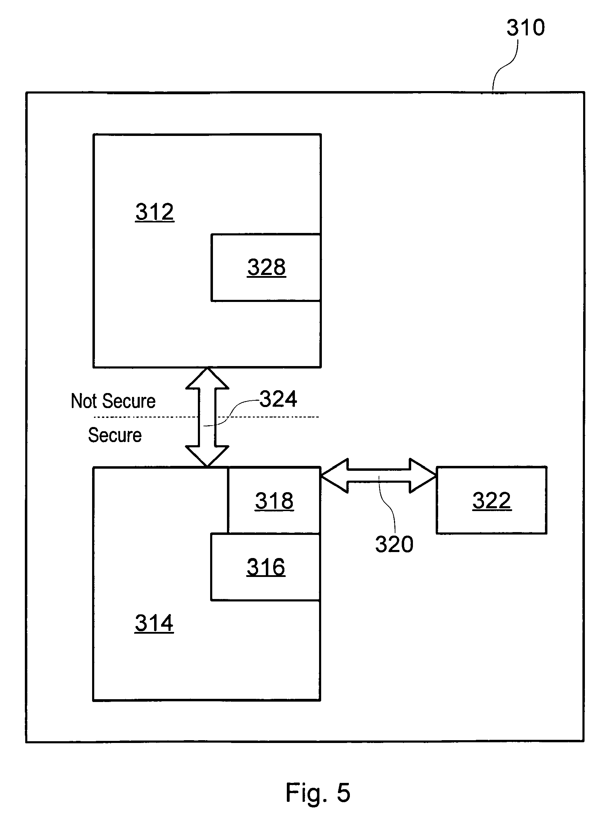

With regard to Fig. 5, there is provided a similar schematic block diagrammatic view of a cell phone handset 310 similar in nature to that of Fig. 3. Thus, within the handset 310 there is again provided applications section 312, a communications section 314, personalisation locks 316 and SIM handler 318 provided within the communications section 314, and an interface 320 for connectivity to a SIM 322.

An API based interface 324 provides for connectivity between the secure communications section 314 and the un-secure applications section 312 which includes personalisation locks 328. However, in this particular embodiment, it will be appreciated that no SIM handler is provided for the applications section 312.

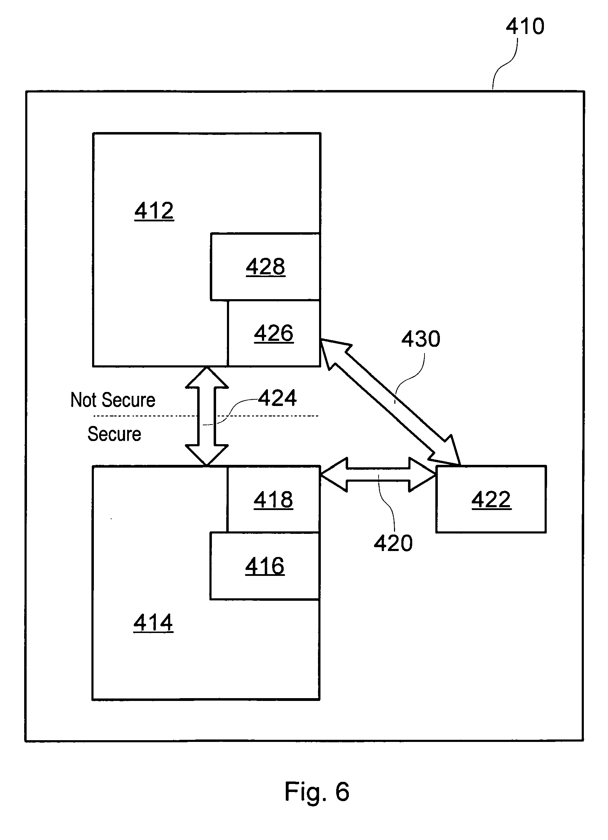

With regard to Fig. 6, there is illustrated a cell phone handset 410 which includes an applications section 412 and a separate communications section 414 arranged, respectively, to provide for user-interface operations and network-access operations.

As is usual, the cell phone handset 410 also includes a SIM 422 or indeed a USIM, which is arranged, by way of an interface 420, to communicate with a SIM handler 418 associated with personalisation locks 416 provided for the communications section. As noted above, the personalisation locks 416 serve to prevent operation of the communications section 414 if it is identified that the SIM 422 mounted within the cell phone handset 410 is not identified as an "authorised" SIM.

An API based interface 424 allows for communication between the communications section 414 and the applications section 412 such that the SIM 422 can have access to the applications section 412 by way of the SIM handler 418 and the API based interface 424 as illustrated.

As noted above, the handset 410 of Fig. 6 can be arranged so as to leave the SIM handler 418 and the API based interface 424 active even while the communications section 414 is disabled through identification of an "unauthorised" SIM 422 so that the applications section 412 can still be accessed and employed even though a SIM 422 which is considered unauthorised by the communications section by the personalisation locks 416 of the communications section 414 has been identified.

Within the representation of the applications section 412 there are further features comprising a further SIM handler 426, and personalisation locks 428, specifically for the applications section 412, and also a direct SIM interface 430.

The duplicate SIM interface 430 and SIM handler 426 allow for connection of the SIM 422 directly to the applications section 412 although, as will be appreciated, additional hardware and signalling is required if such features are employed.

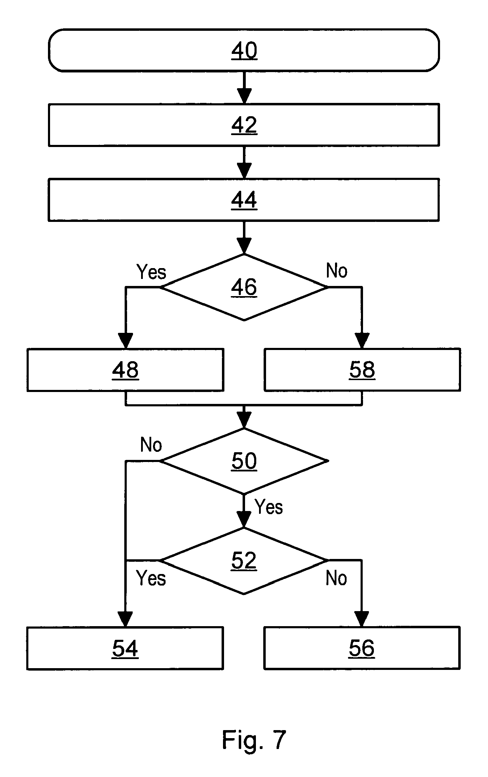

Turning now to Fig. 7, there is illustrated, as a flow diagram, activation of the cell phone handset 10 as illustrated in Figs. 3 to 6, but with particular reference to the embodiment of Fig. 6.

At step 40, the handset 410 is powered-up and proceeds to step 42 where a secure boot-process is carried out which serves to validate all communications section 414 software and memory.

The personalisation locks 416 are then checked by the communications section 412 at step 44 and if, by way of such personalisation locks 416, the SIM 422 of the handset 410 is verified, the process continues to step 48 where the handset 410 is arranged to enter normal communications mode.

Upon entering normal communications mode the handset proceeds to step 50 where it is determined whether or not the applications section 412 personalisation locks 428 are present. If, at step 50, it is determined that the applications section personalisation locks 428 are present, then the process continues to step 52 where it is determined whether or not the SIM 422 is verified.

If, at step 52, it is determined that the SIM 422 in the handset 410 is verified, then all applications are made available at step 54 within the handset 410. If the SIM 422 is not verified at step 52 then a limited set of applications are made available at step 56.

Returning however to step 46, if it is there determined that the SIM 422 cannot be verified, such that it is considered "unauthorised", the process continues to step 58 wherein the communications section 414 is disabled. However, and importantly with regard to the present invention, there is still a possibility that the applications section 414 can be used and so the process continues to step 50 where, as before, it is determined whether or not the applications section personalisation locks 428 are present. The process then continues through steps 52, 54, 56 as discussed previously.

As noted above, and with regard to the determination made at step 46, if direct connection between the applications section 412 and the SIM 422 is not present, then the SIM handler 418 in the communications section 414, and the API based interface 424, remain active.

Yet further, and as discussed above, the particular discrimination of the applications that are available at step 56 can be varied as required based on SIM parameters that are available.

Note that the presence or absence of the direct SIM connection to the applications section does not impact on the operation of the locking system, only on the architecture of the overall system.

As will therefore be appreciated, the present invention provides for a system that allows for the application level while the handset to be used with a SIM that would not otherwise that is not authorised for use with the communications level of the handset.

Advantageously, this allows user data from an old SIM to be easily transferred to a new handset, while maintaining the integrity of the SIM and network locks reserved to restrict the new handsets use. Further benefits are indicated in the examples given earlier.

## Claims

1. A mobile radio communications device and including a communications section for network access operations and an applications section for user-interface operations, and further including personalisation locks for controlling operation on the basis of the identification of whether a SIM card received therein is authorised, wherein the device is arranged such that the applications section can operate with a SIM card that may be identified as unauthorised by personalisation locks associated with a communications section.

2. A device as claimed in Claim 1 and provided with a SIM handler and API related interface between the communications section and the applications section, and which is arranged to remain active even when the communications section is locked.

3. A device as claimed in Claim 1 and provided with a duplicate SIM interface and SIM handler within the applications section and arranged for direct connection of the SIM to the applications section.

4. A device as claimed in Claim 1, 2 or 3 and arranged such that the applications section also includes a personalisation lock.

5. A device as claimed in claim 4, wherein the personalisation lock of the applications section is arranged to restrict the range of applications available to a user.

6. A device as claimed in Claim 4 or 5 wherein the personalisation locks associated with the applications section are arranged to allow data transfer operations but to prevent use of such transferred data within the handset without an authorised SIM being identified.

7. A device as claimed in Claim 4, 5 or 6, wherein the locks associated with the applications section are arranged to be different from those associated with the communications section.

8. A device as claimed in Claim 1, 2 or 3, and arranged such that the personalisation locks apply only to the communications section.

9. A device as claimed in any one or more of the preceding claims wherein the software related to the personalisation locks is located within the communications section.
